(19) Europäisches Patentamt
European Patent Office
Office européen des brevets

(11) EP 0 540 943 B1

(12) EUROPÄISCHE PATENTSCHRIFT

(45) Veröffentlichungstag und Bekanntmachung des Hinweises auf die Patenterteilung:
**14.05.1997 Patentblatt 1997/20**

(51) Int Cl.6: **C08G 59/10**, C08G 73/02, C08G 69/48, D21H 17/54

(21) Anmeldenummer: **92118042.8**

(22) Anmeldetag: **22.10.1992**

(54) **Verfahren zur Herstellung von Polykondensaten**

Process for the preparation of polycondensats

Procédé de préparation de polycondensats

(84) Benannte Vertragsstaaten:
**DE FR GB IT NL SE**

(30) Priorität: **04.11.1991 DE 4136289**

(43) Veröffentlichungstag der Anmeldung:
**12.05.1993 Patentblatt 1993/19**

(73) Patentinhaber: **BAYER AG**
**51368 Leverkusen (DE)**

(72) Erfinder:
- **Reiners, Jürgen, Dr.**
  **W-5090 Leverkusen 1 (DE)**
- **Leiritz, Karl, Dr.**
  **W-4019 Monheim 1 (DE)**
- **Puchner, Fritz, Dr.**
  **W-5000 Köln 50 (DE)**

(56) Entgegenhaltungen:
**EP-A- 374 938**
**EP-A- 0 182 653**
**EP-A- 0 033 104**
**DE-A-13 822 490**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein neues Verfahren zur Herstellung wasserlöslicher, selbstvernetzbarer, lagerstabiler Polykondensate mit niedrigem organischen Chlorgehalt sowie niedrigem Dichlorpropanol-, Chlorpropandiol- und Epichlorhydringehalt, durch Umsetzung von Polyamidaminen und gegebenenfalls Polyaminen mit Epichlorhydrin, wobei das nicht umgesetzte Epichlorhydrin mit einem inerten Gas entfernt wird.

Es ist seit langem bekannt, daß Umsetzungsprodukte von Polyamidaminen und/oder Polyaminen mit Epichlorhydrin zur Verbesserung der Naßfestigkeit von Papier geeignet sind.

Dabei stand die Erzielung einer verbesserten Naßfestwirkung und einer verbesserten Lagerstabilität bisher im Vordergrund der Entwicklung auf diesem Gebiet. Die meisten der bekannten Naßfestmittel weisen aber einen zu hohen organischen Chlorgehalt auf.

Der organische Chlorgehalt setzt sich zusammen aus einem bestimmten Anteil an Chlorhydrinfunktionen und einem Chloranteil, der aus niedermolekularen Nebenkomponenten stammt, die während der Synthese aus Epichlorhydrin gebildet werden. Hierbei handelt es sich um Dichlorpropanol, (DCP) und Chlorpropandiol (CPD).

Bei der Anwendung als Naßfestmittel wird eine wäßrige Lösung des Polykondensats zu einer Zellstoffsuspension gegeben, aus der durch Entwässerung das Papierblatt gebildet wird. Bei unvollständiger Adsorption der Harze an die Cellulose gelangt ein bestimmter Anteil an organischen Halogenverbindungen in das Abwasser der Papierfabrikation, der dort als sog. AOX-Wert erfaßt werden kann (DIN 38409 H14).

Aus dem Stand der Technik sind bereits Lösungsvorschläge zur Verminderung des organischen Chlorgehalts der Polykondensate bekannt. Diese Verfahren basieren im wesentlichen auf einer Nachbehandlung der Reaktionsprodukte mit anorganischen Basen. Die nach diesem Verfahren erhaltenen Produkte sind allerdings nicht in allen Anforderungen zufriedenstellend. So ist die Naßfestigkeit im Vergleich zu herkömmlichen Naßfestmitteln bei bestimmten Anwendungen, z.B. bei der Anwendung im Laminatpapierbereich, noch verbesserungsbedürftig. Außerdem enthalten die Produkte bestimmte Mengen an anorganischen Salzen, die aufgrund der Stabilisierung mit Säuren aus anorganischen Basen gebildet werden.

In der DE-OS 3 708 544 und der DE-OS 3 808 741 werden Naßfestmittel beschrieben, die aufgrund der Basenbehandlung, die während der Herstellung erfolgt, bereits wesentlich niedrigere organische Chlorgehalte besitzen als herkömmliche Naßfestmittel, wobei auch eine ausreichende Lagerstabilität erreicht wird.

Gemäß der US-PS 3 352 833 wird ein Naßfestmittel vor der Verwendung ca. 4 Stunden mit Natronlauge nachbehandelt und dann sofort eingesetzt. Nachteilig bei dieser Verfahrensweise ist, daß eine ausreichende Absenkung des organischen Chlorgehaltes nicht erfolgt, die Harzlösung nicht lagerfähig ist, d.h. innerhalb einer kurzen Zeit verwendet werden muß, und außerdem zahlreiche Probleme für den Anwender der Produkte daraus entstehen, daß für die Dosierung der Base und des Harzes zusätzliche apparative Einrichtungen benötigt werden. Bei Vergleichsversuchen wurden Harzlösungen erhalten, die keine ausreichende Lagerstabilität besitzen und kaum verminderte organische Chlorgehalte aufweisen.

In der DE-OS 3 822 490 werden Polyamidamin-Epichlorhydrin-Harze beansprucht, bei deren Herstellung ebenfalls eine Basenbehandlung vorgenommen wird und deren Gehalt an organisch gebundenem Chlor mit höchstens 4 Gew.-% angegeben wird. Die Nacharbeitung des Beispiels 8 (Produkt mit dem niedrigsten organischen Chlorgehalt) ergab jedoch nicht den angegebenen niedrigen organischen Chlorgehalt von 1,0%, sondern von 2,4 %, jeweils bezogen auf Harz.

Aus der EP-A 0 374 938 ist ein Verfahren zur Herstellung vernetzbarer Harze bekannt, das keine Basenbehandlung vorschreibt und zu Produkten führt, die einen sehr geringen Gehalt an Dichlorhydrin (entspricht Dichlorpropanol, DCP) aufweisen; über den organischen Chlorgehalt werden jedoch keine Angaben gemacht. Eine Nacharbeitung der Beispiele und Analyse der erhaltenen Polykondensate ergab wesentlich höhere Werte für die organischen Chlorgehalte.

Es bestand demnach die Aufgabe ein verbessertes Verfahren zur Herstellung von Polykondensaten mit niedrigen organischen Chlorgehalten bereitzustellen, wobei die nachteiligen Auswirkungen einer Basennachbehandlung vermieden werden.

Es wurde nun ein neues Verfahren zur Herstellung von Polykondensaten durch Umsetzung von

A1) einem basischen Polyamidamin und/oder

A2) einem Polyamin, das gegebenenfalls Hydroxylgruppen enthält, mit

B) Epichlorhydrin,

partieller Vernetzung des Reaktionsproduktes aus A1) und/oder A2) mit B) und anschließender Reaktion mit Säuren C) gefunden, das dadurch gekennzeichnet ist, daß pro mol der in den Komponenten A1) und A2) insgesamt vorhandenen basischen N-Atome 0,3 bis 0,85 mol Epichlorhydrin eingesetzt werden, und die Konzentration der Komponenten

A1), A2) und B) im eingesetzten Lösungsmittel zu Beginn der Umsetzung insgesamt 35 Gew.-% nicht überschreitet, und daß vor und gegebenenfalls auch während der partiellen Vernetzung ein inertes Gas durch die Reaktionsmischung hindurch geleitet wird, wobei das Hindurchleiten

von einem inerten Gas frühestens 30 Minuten nach beendeter Zugabe des Epichlorhydrins begonnen und so lange fortgesetzt wird, bis der Gehalt an freiem Epichlorhydrin im Reaktionsgemisch weniger als 0,1 Gew.-% beträgt, bevor die partielle Vernetzung begonnen wird.

Überraschenderweise haben die nach dem erfindungsgemäßen Verfahren hergestellten Polykondensate sehr niedrige organische Chlorgehalte von weniger als 5 Gew.-% und gleichzeitig auch sehr niedrige Werte für Dichlorpropanol vön maximal 0,5 Gew.-% und für Chlorpropandiol von maximal 0,5 Gew.-% jeweils bezogen auf Festharz) sowie sehr geringe Gehalte an freiem Epichlorhydrin von weniger als 50 ppm bei sehr guter Naßfestwirkung.

Gemäß dem erfindungsgemäßen Verfahren werden mit hoher Raum-Zeit-Ausbeute unter technisch gut handhabbaren Bedingungen und unter ökologisch wesentlich verbesserten Bedingungen klare, bei Raumtemperatur über Monate, vorzugsweise 3 bis 6 Monate, lagerstabile wäßrige, kationaktive Polykondensatlösungen erhalten.

Die Umsetzung der Komponenten A1) und/oder A2) mit B), die im wesentlichen aus einer Addition von B) an A1) und/oder A2) besteht, erfolgt im allgemeinen bei einer Temperatur unter 35°C, vorzugsweise bei einer Temperatur von 5 bis 30°C und bei einem pH-Wert größer oder gleich 7, insbesondere bei einem anfänglichen pH-Wert zwischen 10 und 12, der im Laufe der Reaktion langsam fällt.

Bei Temperaturen über 35°C wird im allgemeinen die Weiterreaktion von noch vorhandenem freiem Epichlorhydrin mit der bei der Kondensation gebildeten HCl zum unerwünschten Dichlorpropanol begünstigt.

Der Anfangs-pH-Wert ist im allgemeinen durch die Konzentration und die Basizität der Komponenten A1) und/oder A2) vorgegeben.

Anfangs-pH-Werte >12 begünstigen die Hydrolyse des noch nicht umgesetzten Epichlorhydrins zum unerwünschten Chlorpropandiol. Anfangs-pH-Werte <7 fördern die Bildung von Dichlorpropanol.

Die Umsetzung von A1) und/oder A2) mit B) besteht im wesentlichen aus einer Additionsreaktion von B) an A1) und/oder A2), wobei ein intermediäres Reaktionsprodukt gebildet wird, das anschließend partiell vernetzt wird.

Unter partieller Vernetzung ist die Kondensation einer Anzahl von z.B. n Chlorhydringruppen des Typs

$$>N-CH_2-CH(OH)-CH_2-Cl$$

unter Bildung von Sequenzen wie

$$-[N^+-CH_2-CH(OH)-CH_2-N^+]_n-CH_2-CH(OH)-CH_2-Cl$$

zu verstehen.

Für den Fall, daß A1) und A2) mit B umgesetzt werden, kann das Polyamin A2) zusammen mit dem Polyamidamin A1) zu Beginn oder im Verlauf der Reaktion zu einem späteren Zeitpunkt dem Polyamidamin A1) enthaltenden Reaktionsgemisch zugegeben werden.

Zur Durchführung des erfindungsgemäßen Verfahrens werden 0,3 bis 0,85 mol der Komponenten B) pro mol der in den Komponenten A1) und A2) insgesamt vorhandenen basischen N-Atome eingesetzt.

Molverhältnisse unter 0,6 mol sind im allgemeinen dann bevorzugt, wenn eine etwas geringere Naßfestwirkung ausreicht. Bei Einsatz von 0,7 bis 0,9 mol Epichlorhydrin pro mol basischer N-Atome der Komponente A) werden Produkte erhalten, die den herkömmlichen Naßfestmitteln auf Basis von überschüssigem Epichlorhydrin in der Naßfestwirkung nicht nachstehen. Es ist also unter bestimmten Bedingungen entgegen dem Stand der Technik nicht notwendig, Epichlorhydrin im Überschuß einzusetzen, um eine gute Naßfestwirkung zu erzielen.

Die Reaktionszeit der Umsetzung von A1) und/oder A2) mit B) bei einer Temperatur unter 35°C sollte 30 bis 300 Minuten, vorzugsweise 60 bis 240 Minuten betragen. Kürzere Reaktionszeiten haben im allgemeinen eine Verschlechterung der Naßfestwirkung zur Folge, längere Reaktionszeiten hingegen vermindern zumeist die Raum-Zeit-Ausbeute.

Die Konzentration der Komponenten A1) und/oder A2) und B) beträgt zu Beginn der Umsetzung vorzugsweise 10 bis 35 Gew.-%, insbesondere 10 bis 25 Gew.-% und ganz besonders bevorzugt 12 bis 19 Gew.-%.

Das Hindurchleiten von einem inerten Gas, vor der partiellen Vernetzung des Reaktionsproduktes aus A1) und/oder A2) mit B), zur Entfernung von nicht umgesetztem Epichlorhydrin, wird frühestens 30 Minuten, vorzugsweise 60 Minuten nach beendeter Zugabe des Epichlorhydrins begonnen und so lange fortgesetzt, bis der Gehalt an freiem

Epichlorhydrin im Reaktionsgemisch weniger als 0,1 Gew.-% beträgt.

In der Regel hat sich eine Einleitungsdauer bis zu 3 Stunden bei Temperaturen von beispielsweise 20 bis 35°C als ausreichend erwiesen.

Auf jeden Fall muß mit dem Einleiten von Inertgas begonnen werden, bevor die Temperatur zur partiellen Vernetzung erhöht wird.

In bestimmten Fällen kann es sich als vorteilhaft erweisen, die Einleitung von Inertgas auch während der folgenden partiellen Vernetzung und bis zum Ende der Synthese fortzusetzen, wobei der Gehalt an freiem Epichlorhydrin bis auf Werte <50 ppm abnimmt. Die Gesamtdauer der Inertgaseinleitung sollte dann aber zumindest für 60 Minuten bei erhöhter Temperatur von beispielsweise 35 bis 80°C fortgesetzt werden.

Bei dem erfindungsgemäßen Verfahren wird das inerte Gas vorzugsweise im Kreislauf geführt. Nach Verlassen des Reaktionsraums wird der mit Epichlorhydrin verunreinigte Gasstrom durch einen Kondensor oder eine Waschlösung geleitet und anschließend in das Reaktionsgefäß zurückgeführt. Das auf diese Weise ausgekreiste Epichlorhydrin kann für weitere Synthesen zurückgewonnen werden. Eine zusätzliche Entgasung der Produkte, z.B. durch Vakuum-Destillation, zur Entfernung von Restmonomeren ist daher nicht erforderlich.

Der gewünschte Effekt, nämlich den Gehalt an freiem Epichlorhydrin (Messung mit Hilfe der Gas-Chromatographie während der Synthese) auf einen Gehalt <0,1 % zu senken, bevor die partielle Vernetzung begonnen wird, muß jedoch erreicht werden. Auf diese Weise wird erreicht, daß das Endprodukt weniger als 0,1 % an Dichlorpropanol und/oder Chlorpropandiol enthält.

Zur partiellen Vernetzung des intermediär gebildeten Reaktionsproduktes aus A1) und/oder A2) mit B) wird, gegebenenfalls nach einer Verdünnung auf eine Konzentration zwischen 5 und 20 Gew.-%, vorzugsweise zwischen 10 und 15 Gew.-%, die Temperatur auf 35 bis 80°C, vorzugsweise 40 bis 60°C, erhöht. Durch die Erhöhung der Temperatur findet eine beschleunigte partielle Vernetzung des durch das Durchleiten von Inertgas von Restmonomeren befreiten Polykondensats statt. Bei dieser Temperatur wird solange kondensiert, bis die Viskosität (bezogen auf die Viskosität einer 15 %igen Lösung bei 25°C) im Bereich zwischen 10 und 150 mPas liegt. Vorzugsweise wird eine Viskosität angestrebt, bei der die Reaktionsprodukte noch wasserlöslich sind. Die Dauer der Kondensation richtet sich nach der gewünschten Viskosität. In jedem Fall muß aber durch rechtzeitiges Ansäuern mit Säuren C) eine vollständige vorzeitige Vernetzung verhindert werden.

Der Grad der Vernetzung kann außer über die Viskosität auch über den Umsetzungsgrad der Chlorhydringruppen im intermediär gebildeten Reaktionsprodukt aus A1) und/oder A2) mit B) bestimmt werden. Vorzugsweise wird solange vernetzt, bis mindestens 50 Mol-% der Chlorhydringruppen im intermediären Reaktionsprodukt unter Chloridbildung reagiert haben.

Bei einer Viskosität <10 mPas wird das Maximum der Naßfestigkeit nicht erreicht. Bei einer Viskosität >150 mPas nimmt die Lagerstabilität des Endproduktes ab und die Naßfestigkeit entspricht ebenfalls nicht dem Optimum. In jedem Fall ist die maximale Viskosität damit festgelegt, daß noch lösliche Produkte entstehen.

Es ist weiter vorteilhaft, wenn bis zu 10 Mol-% Polyamidamin A1) und/oder Polyamin A2), bezogen auf das jeweils zu Beginn eingesetzte Polyamidamin A1) und/oder Polyamin A2), während der partiellen Vernetzung nachdosiert werden. Dadurch kann die Reaktionszeit weiter verkürzt und der Gehalt an organisch gebundenem Chlor reduziert werden.

Sobald die gewünschte Lösungsviskosität erreicht ist, wird durch Zugabe von Säuren C) auf einen pH-Wert zwischen 2 und 5, vorzugsweise 2,5 und 4, eingestellt. Niedrigere pH-Werte führen zum hydrolytischen Abbau der Polyamidamin-Bausteine, die sich in einer langsamen Abnahme der Lösungsviskosität bei Lagerung äußert. PH-Werte >4 vermindern die Lagerstabilität der Harzlösungen aufgrund vorzeitiger vollständiger Vernetzung, bei der das Produkt unlöslich wird.

In der Regel werden 0,1 bis 2 mol Säure pro mol eingesetztes Epichlorhydrin zur Stabilisierung benötigt. Bei Bedarf kann anschließend der Feststoffgehalt noch korrigiert werden.

Als basische Polyamidamine A1) zur Herstellung der wasserlöslichen selbstvernetzenden Polykondensate eignen sich Kondensationsprodukte, bestehend aus Struktureinheiten, die sich ableiten von

a) aliphatischen und/oder aromatischen Dicarbonsäuren oder deren funktio nellen Derivaten und

b) Polyaminen, die mindestens zwei zur Amidbildung befähigte Aminogruppen und mindestens eine weitere sekundäre oder tertiäre Aminogruppe enthalten und gegebenenfalls

c) Polyaminen, die zwei zur Amidbildung befähigte Aminogruppen enthalten, und gegebenenfalls

d) omega-Aminocarbonsäuren und/oder Lactamen,

wobei bevorzugt jeweils, bezogen auf 1 mol der Komponente a), 0,8 bis 1,2 mol der Komponente b) und gegebenenfalls bis zu 0,8 mol der Komponente c) und gegebenenfalls bis zu 1,5 mol der Komponente d) eingesetzt werden, mit der

Maßgabe, daß das Molverhältnis (b) + c)) : a) Werte zwischen 0,8:1 und 1,2:1 annimmt.

Als basische Polyamidamine A1) kommen auch solche in Betracht, bei denen bis zu 20 mol-% der vorhandenen sekundären basischen Aminogruppen durch Alkylierung in tertiäre Aminogruppen überführt wurden. Unter Alkylierung ist hierbei die Umsetzung der sekundären Aminogruppen mit Alkylhalogeniden, Dialkylsulfaten, Alkylalkansulfonaten und Acrylverbindungen zu verstehen.

Beispielsweise seien folgende Alkylhalogenide genannt:
Methylchlorid, Ethylchlorid, Chlorpropanol, Chlorethanol, Chlorpropandiol.

Dialkylsulfate sind beispielsweise: Dimethylsulfat, Diethylsulfat, Dipropylsulfat.

Beispielsweise seien folgende Alkylalkansulfonate genannt:
Methansulfonsäuremethylester, Methansulfonsäureethylester, Ethansulfonsäurechlorpropylester.

Beispielsweise seien folgende Acrylverbindungen genannt:
Acrylnitril, Acrylamid, Acrylsäuremethylester, Acrylsäureethylester, Acrylsäurebutylester, Acrylsäureisobutylester.

Bevorzugte Polyamidamine A1) haben z.B. als wäßrige Lösung mit einer Konzentration von 50 Gew.-% eine Viskosität von 200 bis 600 mPas bei 25°C und ein Basen-Äquivalentgewicht zwischen 300 und 700 g/Val Basen-Stickstoff und besitzen ein mittleres Molgewicht $M_n$ im Bereich zwischen 500 g/mol und ca. 10 000 g/mol.

Die eingesetzten Dicarbonsäuren a) entsprechen vorzugsweise der Formel

$$R^9 — O - CO - (CH_2)_e - CO - O — R^{10} \qquad (III)$$

in der

| | |
|---|---|
| $R^9$ und $R^{10}$ | unabhängig voneinander für Wasserstoff oder $C_1$-$C_6$-Alkyl stehen, und |
| e | für 0 bis 10 steht. |

Naturgemäß können bei der Herstellung der Polyamidamine A1) auch Gemische von Dicarbonsäuren bzw. deren Derivate wie Ester oder Anhydride eingesetzt werden. Beispielsweise seien folgende Dicarbonsäuren a) bzw. Dicarbonsäurederivate genannt:
Oxalsäure, Malonsäure, Bernsteinsäure, Glutarsäure, Adipinsäure, Sebacinsäure, Oxalsäuredimethylester, Oxalsäurediethylester, Malonsäurediethylester, Bernsteinsäureanhydrid, Glutarsäuremonomethylester, Glutarsäurediethylester, Adipinsäuremonomethylester, Adipinsäuredimethylester, Sebacinsäuredimethylester, Isophthalsäure, Terephthalsäure, Isophthalsäuredimethylester, Maleinsäureanhydrid, Itaconsäure, Itaconsäuredimethylester.

Beispielsweise seien folgende Polyamine b) genannt:
Diethylentriamin, Triethylentetramin, Tetraethylenpentamin, Pentaethylenhexamin, Hexaethylenheptamin, Dipropylentriamin, Dihexamethylentriamin, N-Methyl-bis(3-aminopropyl)amin, Tris(2-aminoethyl)amin, N-(2-aminoethyl)piperazin, aminoethylpiperazin, Bisaminopropylpiperazin.

Beispielsweise seien folgende Polyamine c) genannt:
Ethylendiamin, Diaminopropan, 1,6-Diaminohexan, N-(2-hydroxyethyl)ethylendiamin, N,N'-Dimethylethylendiamin, N-Methyl-1,3-diaminopropan, Isophorondiamin, 4,4'-Diamino-dicyclohexylmethan, Piperazin.

Bevorzugte Lactame d) sind beispielsweise Caprolactam, Lauryllactam, bevorzugte Aminocarbonsäuren d) sind Aminocapronsäure und 11-Amino-undecansäure.

Die im erfindungsgemäßen Verfahren eingesetzten Polyamine A2) entsprechen vorzugsweise der Formel (I)

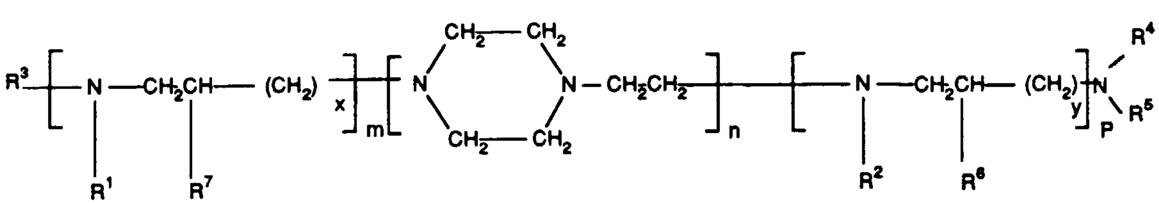

(I)

in welcher

| | |
|---|---|
| x und y | unabhängig voneinander für 0 oder 1 stehen |

m und p — unabhängig voneinander für 0 bis 5 stehen
$R^6$ und $R^7$ — unabhängig voneinander für H oder Methyl stehen
n — für 0 bis 5 steht,
$R^1$, $R^2$ und $R^3$ — unabhängig voneinander für H, Methyl, Ethyl, Hydroxyethyl, Hydroxypropyl oder einen Rest der Formel (II)

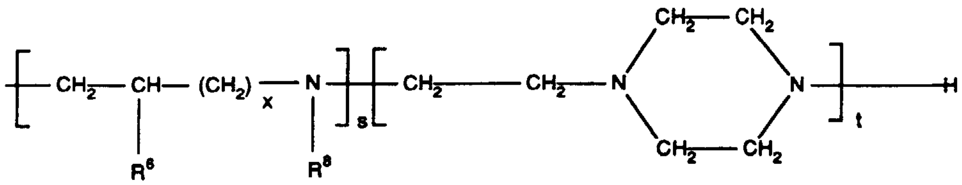

(II)

stehen,
worin

$R^8$ — für H, Methyl oder Ethyl steht,
$R^6$ und x — die oben genannte Bedeutung haben und
s und t — unabhängig voneinander für 0 bis 3 stehen,

und

$R^5$ und $R^4$ — unabhängig voneinander für H, Methyl, Ethyl, Hydroxyethyl, Hydroxypropyl stehen, wobei aber mindestens ein Rest $R^4$ oder $R^5$ für H steht oder
$R^4$ und $R^5$ — gemeinsam für eine Gruppe der Formel $-CH_2-CH_2-NH-CH_2-CH_2-$ stehen, und

wobei für den Fall, daß m, n und p für Null stehen, wenigstens einer der Substituenten $R^3$, $R^4$ und $R^5$ verschieden von Wasserstoff ist.

Beispiele für besonders bevorzugte Polyamine A2) der Formel (I) sind: Diethylentriamin, Triethylentetramin, Tetraethylenpentamin, Pentaethylenhexamin, Hexaethylenheptamin, Dipropylentriamin, Dihexamethylentriamin, N-Methyl-bis-(3-aminopropyl)amin, Tris(2-aminoethyl)amin, Piperazin, Bis(piperazinyl)ethan, N-(2-aminoethyl)-piperazin, Bisaminoethylpiperazin, Bisaminopropylpiperazin.

Naturgemäß können anstelle der reinen Polyamine A2) auch Polyamingemische eingesetzt werden.

Die Umsetzung mit Säuren C) dient zur Stabilisierung der Polykondensate, wobei noch vorhandene basische N-Atome protoniert werden.

Als Säuren C) seien beispielsweise genannt:
Salzsäure, Schwefelsäure, Salpetersäure, Phosphorsäure, Ameisensäure, Essigsäure, Zitronensäure, Äpfelsäure, Phosphonobutantricarbonsäure, Malonsäure, Propionsäure, Weinsäure, Adipinsäure, Glutarsäure oder Gemische daraus.

Weiterhin sind unter C) auch sauer reagierende Verbindungen wie Carbonsäureanhydride oder saure Salze zu verstehen, beispielsweise seien genannt: Maleinsäureanhydrid, Acetanhydrid, Kalium- oder Natriumhydrogensulfat, Kalium- oder Natriumdihydrogenphosphat.
Vorzugsweise werden als C) Salzsäure, Schwefelsäure, Ameisensäure, Acetanhydrid und Essigsäure verwendet.

Die Herstellung der Polyamidamine A1) erfolgt in der üblichen Weise z.B. dadurch, daß man die Komponenten a) bis d) zunächst auf Temperaturen zwischen 100 und 150°C erhitzt und die erhaltene dünnflüssige Schmelze nach maximal drei Stunden langsam auf maximal 220°C unter Normaldruck weiter erhitzt, wobei das gebildete Reaktionswasser abdestilliert wird. Zur Vermeidung von Verfärbungen ist es zweckmäßig, unter Ausschluß von Sauerstoff zu kondensieren und gegebenenfalls in geringen Mengen Carbonsäurehydrazide zuzusetzen. Es wird dabei solange destilliert, bis >98 % der theoretischen Menge an Wasser dem Gleichgewicht entzogen ist, d.h. es muß pro mol Carboxylgruppe der Dicarbonsäure 1 mol Wasser abgespalten werden.

Im Anschluß an die Schmelzpolykondensation wird vorzugsweise durch Zugabe von Wasser auf einen Feststoffgehalt von 25 bis 60 Gew.-%, besonders bevorzugt von 40 bis 55 Gew.-%, verdünnt, da die Polyamidamine in dieser verdünnten Form leichter gelagert und weiterverarbeitet werden können.

Inerte Gase im Sinne der Erfindung sind Stickstoff, Argon sowie Luft, bevorzugt ist Stickstoff.

Die nach dem erfindungsgemäßen Verfahren erhaltenen Polykondensatlösungen haben einen Feststoffgehalt von beispielsweise 5 bis 30 Gew.-%, vorzugsweise von 10 bis 25 Gew.-%, besonder bevorzugt 12 bis 20 Gew.-% und

einen pH-Wert zwischen 2 und 5, vorzugsweise zwischen 2,5 und 4. Die Viskosität einer 15 %igen Polykondensatlösung bei 25°C beträgt zwischen 10 und 150 mPas, vorzugsweise zwischen 20 und 80 mPas. Die Produkte haben etwa ein mittleres Molekulargewicht (Gewichtsmittel $\overline{M}_w$) von mindestens 1 000, bevorzugt zwischen 1 000 und 1 000 000 g/mol. Die Polykondensatlösung ist frei von anorganischen Salzen, da erfindungsgemäß keine anorganischen Basen zur Verminderung des organischen Chlorgehalts eingesetzt werden.

Die erfindungsgemäß erhältlichen Polykondensate können als Papierhilfsmittel, vor allem zur Naßfestausrüstung von Papier oder papierähnlichen Materialien, wie Pappe oder Karton, sowie als Textilhilfsmittel zur Behandlung nativer oder synthetischer Fasermaterialien Verwendung finden. Die Ausrüstung erfolgt in an sich bekannter Weise. Bei der Naßfestausrüstung von Papier geht man so vor, daß man die wäßrige Lösung des Polykondensats zu einer Suspension des Faserrohstoffs zugibt und durch Entwässerung daraus das Papier bildet. Zur Prüfung werden im allgemeinen im Labor Papierblätter mit einem Flächengewicht von 50 bis 100 $m^2$/g gebildet. Die Einsatzmengen richten sich nach dem angestrebten Effekt. In der Regel sind aber Einsatzmengen von 0,01 bis 2 Gew.-%, vorzugsweise 0,1 bis 1,2 Gew.-% Festharz, bezogen auf trockenen Faserrohstoff, ausreichend. Die erfindungsgemäßen Harze bieten aufgrund der schnellen Vernetzung bei der Trocknung z.B. der Papierbahn auf einer Papiermaschine gute Naßfestigkeit sofort ab Maschine. Die Polykondensate sind mit üblichen optischen Aufhellern gut verträglich und beeinflussen die Saugfähigkeit des Papiers nicht. Außerdem läßt sich für die Anwendung im Hygiene-Papierbereich ein weicher Griff des Papiers erzeugen.

Auch außerhalb der Anwendung auf dem Papiergebiet ergeben sich weitere Einsatzgebiete, beispielsweise bei der Reinigung von Industrieabwässern, zur Spaltung von Öl-in-Wasser-Emulsionen, z.B. Kühl-Schmier-Emulsionen, Walzölemulsionen oder z.B. Emulsionen, wie sie bei der tertiären Erdölförderung anfallen. Weiterhin bewirken die Polykondensate eine Verstärkung der Leimungswirkung bei Reaktivleimungsmitteln und sind in Kombination mit kationischen polymeren Leimungsmitteln vorteilhaft einsetzbar.

Eine weitere wichtige Anwendungsform für die Polykondensate ist die Verwendung als Vernetzer für Bindemittel im Textildruck, wie sie z.B. in der DE-OS 936 328 und der DE-OS 3 914 047 beschrieben sind. Solche Bindemittel bestehen z.B. aus einem Polyamidamin, einem nach dem erfindungsgemäßen Verfahren hergestellten Polykondensat als Vernetzer und gegebenenfalls Homo- und Copolymerisaten von Vinylverbindungen sowie weiteren üblichen Zusätzen wie z.B. Pigmenten, Harnstoff oder Emulgatoren, wobei der Anteil an Polykondensaten bis zu 60 Gew.-% betragen kann.

Die praktische Ausführung des Verfahrens des Textildrucks gestaltet sich in an sich bekannter Weise indem man z.B. eine das basische Polyamidamin, das erfindungsgemäß hergestellte Polykondensat und gegebenenfalls die Polyvinylverbindung enthaltende Druckpaste bereitet und mit dieser Druckpaste auf einem Druckaggregat den Faserstoff bedruckt und anschließend, gegebenenfalls bei erhöhter Temperatur, kondensiert.

Das erfindungsgemäße Verfahren zur Herstellung wasserlöslicher, selbstvernetzender und lagerstabiler Polykondensate zeichnet sich durch folgende Vorteile gegenüber dem Stand der Technik aus:

- Die Polykondensate enthalten wesentlich weniger organisch gebundenes Chlor als bekannte Produkte.
- Der Gehalt an freiem Epichlorhydrin im Endprodukt liegt bei weniger als 50 ppm, bezogen auf Festharz.
- Trotz des geringen Einsatzes an Epichlorhydrin ergeben die Polykondensate überraschend gute Naßfestigkeiten bei dem damit ausgerüsteten Papier und besitzen eine hervorragende Lagerstabilität.

Das Verfahren ist:

- besonders umweltschonend,
- einfacher durchführbar als Verfahren, die anorganische Basen zur Entfernung des organisch gebundenen Halogens einsetzen;
- effektiver, da durch die optimale Verwertung des eingesetzten Epichlorhydrins Nebenreaktionen im Reaktionsgemisch unterdrückt werden.

Die Produkte eignen sich gegenüber Produkten nach dem Stand der Technik besser zur Verminderung der AOX-Belastung von Papierfabrikationsabwässern.

<u>Beispiele</u>

Die Vergleichsbeispiele wurden so genau wie möglich nachgearbeitet. Geringfügige Abweichungen bei den Reaktionszeiten, Temperaturen oder den zugesetzten Wassermengen ergaben sich in einigen Fällen zwangsläufig da nur so die vorgegebenen Produkteigenschaften wie Viskosität und Feststoffgehalt erzielt werden konnten.

Alle %-Angaben in den Beispielen sind Gew.-%.

Die Analysenergebnisse und anwendungstechnischen Prüfdaten für alle Beispiele finden sich in Tabelle 1.

Beispiel 1 (Vergleich)

Beispiel 1 der EP 0 374 938 A1 wurde wie folgt nachgestellt.

a) Herstellung der Polyamidaminlösung:
216,8 g (2,105 mol) Diethylentriamin, 21 g Wasser, 292 g (2,0 mol) Adipinsäure wurden unter Zusatz von 4 g (0,04 mol) 98 % Schwefelsäure kondensiert. Dazu wurde zunächst auf 140°C erwärmt und 1 Stunde bei dieser Temperatur gerührt. Die Temperatur wurde 12 Stunden bei 155 bis 160°C gehalten, wobei 93 g Wasser abdestilliert wurden. Danach wurde durch vorsichtige Zugabe von Wasser (450 g) eine Polyamidaminlösung erhalten.
Feststoffgehalt: 49,5 %
Viskosität (25°C): 480 mPas
Basen-Äquivalentgewicht: 401 g/bas.N (Lösung).

b) Herstellung des Polyamidamin-Epichlorhydrin-Harzes:
120,3 g (0,3 mol) der erhaltenen Polyamidaminlösung wurden mit 52,7 g Wasser verdünnt. Danach wurden innerhalb von 30 Minuten tropfenweise 33,3 g (0,36 mol) Epichlorhydrin bei 20°C zugegeben. Die erhaltene Lösung (Konzentration = 45 %) wurde auf 30°C erwärmt (erste Heizstufe). Nach 16 Stunden wurden 59 g Wasser zugesetzt und somit eine Konzentration von 35,0 % eingestellt Danach wurde auf 45°C erwärmt (zweite Heizstufe). Als die Viskosität 200 inPas (25°C) erreichte, wurden 333 g Wasser zugegeben und mit 3,8 g 96 %iger Schwefelsäure auf pH 3,4 angesäuert.
Feststoffgehalt: 15,5 % (5 g, 150°C, 3 Stunden)
Viskosität (25°C): 20 mPas.

Beispiel 2 (Vergleich)

a) Die Synthese des Polyamidamins gemäß Beispiel 1 der EP 0 374 938 A1 wurde wiederholt. Das Produkt hatte folgende Daten:
Feststoffgehalt: 49,0 %
Viskosität (25°C): 450 mPas
Basen-Äquivalentgewicht: 406 g/bas.N (Lösung).

b) Das Polyamidamin-Epichlorhydrin-Harz gemäß Beispiel 3 der EP 0 374 938 A1 wurde nachgestellt.
121,8 g (0,3 mol) der Polyamidaminlösung aus Beispiel 2a) wurden mit 95 g Wasser verdünnt. Dann wurden 25 g (0,27 mol) Epichlorhydrin bei 20°C tropfenweise innerhalb von 15 Minuten zu der Lösung gegeben (Konzentration = 35,0 %). Die erhaltene Lösung wurde 15 Stunden bei 30°C gerührt (erste Heizstufe).
Danach wurde zur weiteren Kondensation auf 35°C erwärmt. Nach Erreichen der Endviskosität von 300 mPas (25°C), wurden 287 g Wasser zugegeben (Konzentration = 16,0 %) und mit 9,4 g 96 %iger Schwefelsäure ein pH-Wert von 3,4 eingestellt.
Feststoffgehalt: 17,7 %
Viskosität (25°C): 36 mPas.

Beispiel 3 (Vergleich)

a) Die Synthese des Polyamidamins gemäß Beispiel 3 der EP 0 374 938 A1 wurde wiederholt.
309 g (3,00 mol) Diethylentriamin, 30 g Wasser, 416,1 g (2,85 mol) Adipinsäure wurden unter Zusatz von 9 g (0,09 mol) 98 % Schwefelsäure kondensiert. Dazu wurde zunächst auf 140°C erwärmt und 1 Stunde bei dieser Temperatur gerührt. Die Temperatur wurde 24 Stunden bei 155 bis 160°C gehalten, wobei 136,3 g Wasser abdestilliert wurden. Danach wurde durch vorsichtige Zugabe von Wasser (620 g) eine Polyamidaminlösung erhalten.
Feststoffgehalt: 50,3 %
Viskosität (25°C): 840 mPas
Basen-Äquivalentgewicht: 406 g/bas.N (Lösung).

b) Das Polyamidamin-Epichlorhydrin-Harz gemäß Beispiel 3 der EP 0 374 938 A1 wurde nachgestellt.

125 g (0,307 mol) der Polyamidaminlösung wurden mit 101 g Wasser verdünnt. Dann wurden 25 g (0,27 mol) Epichlorhydrin bei 20°C tropfenweise innerhalb von 15 Minuten zu der Lösung gegeben (Konzentration = 35,0 %). Die erhaltene Lösung wurde 6,75 Stunden bei 30°C gerührt. Nach Erreichen der Viskosität von 400 mPas (30°C), wurden 289 g Wasser zugegeben (Konzentration = 16,0 %) und nach weiteren 30 Minuten bei 30°C mit 12,2 g 96 %iger Schwefelsäure ein pH-Wert von 2,8 eingestellt. Danach wurde der Feststoffgehalt eingestellt.
Feststoffgehalt: 15,5 %
Viskosität (25°C): 35 mPas.

Beispiel 4 (Vergleich)

Beispiel 8 der DE 3 822 490 A1 wurde nachgestellt.

a) Herstellung des Polyamidamins gemäß Beispiel 1 der DE 3 822 490 A1:
392 g (3,8 mol) Diethylentriamin und 24,4 g (0,4 mol) 2-Amino-ethanol wurden in einen Vierhalskolben, der mit Rührer, Thermometer und Destillationsapparatur versehen war, gefüllt und innerhalb von 30 Minuten 584 (4,0 mol) Adipinsäure portionsweise zugegeben, wobei die Temperatur unter 110°C gehalten wurde. Dann wurde unter Stickstoff in 2 Stunden auf 150°C erwärmt und 1 Stunde bei dieser Temperatur gehalten. Unter Abdestillieren des gebildeten Wassers wurde langsam auf 170°C erwärmt und bei dieser Temperatur etwa 3 Stunden gehalten. Eine Probe des Polykondensats hatte eine Säurezahl von 19 mg KOH/g. Nach Entfernen der Heizung wurde mit 570 g Wasser verdünnt.
Feststoffgehalt: 60,0 % (5 g, 150°C, 3 Stunden)
Viskosität (25°C): 870 mPas
Amin-Zahl: 249 mg KOH/g bezogen auf Festharz
Basen-Äquivalentgewicht: 375 g/bas.N (Lösung)
Basen-Äquivalentgewicht: 225 g/bas.N (Festharz).

b) Herstellung des Polyamidamin-Epichlorhydrin-Harzes gemäß Beispiel 8 der DE 3 822 490 A1:
207 g (0,552 mol) der Polyamidaminlösung aus Beispiel 4 a) und 207 g Wasser wurden in einem Vierhalbskolben mit Rührer, Thermometer, Kühler und pH-Elektrode gegeben. Unter Rühren wurden bei 20°C 66,5 g (0,72 mol) Epichlorhydrin zugesetzt (Konzentration = 39,7 %). Innerhalb von 45 Minuten wurde auf 60°C erwärmt. Nach 3,5 Stunden bei dieser Temperatur betrug die Viskosität (60°C) 175 mPas.
Dann wurden 578 g einer 2,0 %igen Natronlauge zugegeben, wobei sich ein pH von 10,8 einstellt, und auf 65°C erwärmt (Konzentration = 19 %). Bei dieser Temperatur wurde 1,75 Stunden weitergerührt, bis die Viskosität 125 mPas (65°C) betrug. Der pH-Wert war inzwischen auf 7,9 abgefallen. Dann wurden 442 g Wasser, in denen 1,5 g Kaliumsorbat gelöst waren, zugegeben, gekühlt und anschließend mit 14,1 g 96 %iger Schwefelsäure auf einen pH-Wert von 3,0 eingestellt.
Feststoffgehalt: 13,7 % (5 g, 150°C, 3 Stunden)
Viskosität (25°C): 80 mPas.

Beispiel 5 (Vergleich)

Herstellung des Polyamidamin-Epichlorhydrin-Harzes gemäß Beispiel 6 der DE 3 822 490 A1.
Zu 207 g (0,552 mol) der Polyamidaminlösung aus Beispiel 4 a) und 207 g Wasser wurden in der in Beispiel 4 b) verwendeten Apparatur unter Rühren 66,5 g (0,72 mol) Epichlorhydrin zugegeben. In 45 Minuten wurde die Mischung (Konzentration = 39,6 %) auf 60°C erwärmt und bei dieser Temperatur gehalten. Nach 2,5 Stunden betrug die Viskosität (60°C) 155 mPas.

Dann wurden 578 g einer 1 %igen Natronlauge zugegeben, wobei der pH-Wert auf 9,8 anstieg. Es wurde auf 65°C erwärmt (wobei der pH-Wert fiel) und bei dieser Temperatur weitergerührt, bis die Viskosität 120 mPas (65°C) betrug (ca. 45 Minuten). Dann wurden 442 g Wasser, in denen 1,5 g Kaliumsorbat gelöst waren, zugegeben, gekühlt und anschließend mit 10,0 g 96 %iger Schwefelsäure auf einen pH-Wert von 3,5 eingestellt.
Feststoffgehalt: 13,2 % (5 g, 150°C, 3 Stunden)
Viskosität (25°C): 40 mPas.

Beispiel 6 (Vergleich)

In Anlehnung an die Lehre und an die Ansprüche 1 bis 6 der DE 3 822 490 A1 wurde Beispiel 6 der DE 3 822 490 A1 in der Weise abgeändert, daß nur 0,7 mol Epichlorhydrin pro mol basischer (mit Epichlorhydrin reaktiver) Aminogruppe des Polyamidamins eingesetzt wurden.

Zu 207 g (0,552 mol) der Polyamidaminlösung aus Beispiel 4 a) und 160 g Wasser wurden in der in Beispiel 4 b) verwendeten Apparatur unter Rühren 35,7 g (0,386 mol) Epichlorhydrin in 40 Minuten zugegeben. In 45 Minuten wurde die Mischung (Konzentration = 39,7 %) auf 60°C erwärmt und bei dieser Temperatur gehalten. Bereits nach 40 Minuten stieg die Viskosität sehr schnell an, so daß trotz der sofortigen Verdünnung mit 312 g und danach mit 568 g Wasser und Ansäuern mit Schwefelsäure auf pH 3 nur ein vernetztes Gel erhalten werden konnte. Eine Verdünnung des Ansatzes mit einer 1 %igen Natronlauge (0,20 mol NaOH pro mol Epichlorhydrin, entsprechend dem Beispiel 6 der DE 3 822 490 A1) wäre nicht mehr möglich gewesen. Eine Prüfung war nicht möglich.

Beispiel 7 (Vergleich)

Beispiel 6 wurde wiederholt mit der Änderung, daß nach der Epichlorhydrin-Zugabe 30 Minuten bei 30°C nachgerührt und bei niedrigerer Temperatur kondensiert wurde.

Zu 207 g (0,552 mol) der Polyamidaminlösung aus Beispiel 4 a) und 160 g Wasser wurden in der in Beispiel 4 b) verwendeten Apparatur unter Rühren 35,7 g (0,386 mol) Epichlorhydrin in 30 Minuten zugetropft. Nach weiteren 60 Minuten bei 25°C wurde die Mischung (Konzentration = 39,7 %) in 45 Minuten auf 45°C erwärmt und bei dieser Temperatur gehalten. Nach 2,5 Stunden war eine Lösungsviskosität von 100 mPas (45°C) erreicht. Der Ansatz wurde mit 312 g einer 1 %igen Natronlauge (0,20 mol NaOH pro mol Epichlorhydrin, entsprechend dem Beispiel 6 der DE 3 822 490 A1) auf eine Konzentration von 22,8 % verdünnt. Dabei stellten sich eine Temperatur von 36°C und ein pH-Wert von 8,5 ein, der im weiteren Verlauf der Kondensation weiter fiel. Die Temperatur wurde wieder auf 45°C angehoben. Nach 45 Minuten wurde bei einer Viskosität von 100 mPas (45°C) mit 588 g Wasser, das 1,5 g Kaliumsorbat gelöst enthielt, auf eine Konzentration von 12,7 % verdünnt. Bei 35°C wurde noch 8 Minuten weitergerührt und dann mit 23,1 g 96 %iger Schwefelsäure auf einen pH-Wert von 3,5 eingestellt. Eine weitere Probe wurde auf einen pH-Wert von 2,7 eingestellt. Die Probe mit pH 3,5 konnte bereits nach 48 Stunden nicht mehr verarbeitet werden, da sie vernetzt war.
Feststoffgehalt: 14,2 % (5 g, 150°C, 3 Stunden)
Viskosität (25°C): 75 mPas.

Beispiel 8 (Vergleich zu Beispiel 9 ohne Stickstoff)

a) Herstellung des Polyamidamins
In einem Reaktionsgefäß mit Gaseinleitungsrohr, Rührer, Innenthermometer und Kolonnenkopf wurden 211,5 g (2,05 mol) Diethylentriamin vorgelegt. Unter Rühren wurden 292 g (2,0 mol) Adipinsäure so zugegeben, daß die Temperatur des Reaktionsgemisches 110°C nicht überschritt. Nach beendeter Zugabe wurde unter Überleiten von Stickstoff auf 150°C erwärmt und 1 Stunde unter Rückfluß erhitzt. Danach wurde die Temperatur im Verlauf von 3 Stunden auf 190 bis 195°C erhöht, wobei das Reaktionswasser kontinuierlich abdestilliert wurde. Als die theoretische Menge Wasser (72 g) abdestilliert war, wurde nach Abkühlen der Schmelze auf 170°C durch langsame Zugabe von Wasser auf den gewünschten Feststoffgehalt eingestellt.
Feststoffgehalt: 49,1 % (5 g, 150°C, 3 Stunden)
Viskosität (25°C): 470 mPas
Basen-Äquivalentgewicht: 414 g/bas.N (Lösung)
Basen-Äquivalentgewicht: 203 g/bas.N (Festharz).

b) Herstellung des Polyamidamin-Epichlorhydrin-Harzes
In einem Vierhalskolben mit Rührer Thermometer, Rückflußkühler, pH-Elektrode und Gaseinleitungsrohr wurde eine Mischung von 207 g (0,5 mol) des Polyamidamins aus Beispiel 8 a) und 832,7 g Wasser vorgelegt. Bei 20°C wurden innerhalb von 30 Minuten 32,4 g (0,350 mol) Epichlorhydrin zugetropft (Konzentration = 12,5 %). Die Temperatur wurde auf 30°C eingestellt und es wurde weitere 180 Minuten gerührt. Anschließend wurde bei 50°C 60 Minuten gerührt. Nach Zugabe von 2,9 g (0,007 mol) des Polyamidamins aus Beispiel 8 a) wurde die Temperatur auf 55°C erhöht. Als nach weiteren 90 Minuten bei 55°C das Reaktionsgemisch eine Lösungsviskosität von 50 mPas (25°C) aufwies, wurde mit 12,8 g 96 %iger Schwefelsäure auf einen pH-Wert von 2,8 eingestellt.
Feststoffgehalt: 13,8 % (5 g, 150°C, 3 Stunden)
Viskosität (25°C): 68 mPas.

Beispiel 9 (erfindungsgemäß)

Herstellung des Polyamidamin-Epichlorhydrin-Harzes
In einem Vierhalskolben mit Rührer, Thermometer, Rückflußkühler, pH-Elektrode und Gaseinleitungsrohr wurde eine Mischung von 207 g (0,5 mol) des Polyamidamins aus Beispiel 8 a) und 834,3 g Wasser vorgelegt. Bei 20°C wurden innerhalb von 30 Minuten 32,6 g (0,352 mol) Epichlorhydrin zugetropft (Konzentration = 12,5 %). Die Temperatur wurde

auf 30°C erhöht und es wurde weitere 60 Minuten gerührt. Dann wurde unter Einleitung eines Stickstoffstroms weitere 120 Minuten gerührt. Die Temperatur wurde anschließend auf 45°C erhöht. Unter weiterem Einleiten des Stickstoffstroms wurde bei 45°C 60 Minuten gerührt und nach Zugabe von 4,6 g (0,011 mol) des Polyamidamins aus Beispiel 8 a) die Temperatur langsam auf 55°C erhöht. Als das Reaktionsgemisch eine Lösungsviskosität von 45 mPas (25°C) aufwies, wurde mit 12,2 g 96 %iger Schwefelsäure auf einen pH-Wert von 2,7 eingestellt.
Feststoffgehalt: 13,9 % (5 g 150°C, 3 Stunden)
Viskosität (25°C): 52 mPas.

Beispiel 10 (erfindungsgemäß)

Herstellung des Polyamidamin-Epichlorhydrin-Harzes
In einem Vierhalskolben mit Rührer Thermometer, Rückflußkühler, pH-Elektrode und Gaseinleitungsrohr wurde eine Mischung von 207 g (0,5 mol) des Polyamidamins aus Beispiel 8 a), 3,25 g (0,0224 mol) N-Methyl-bis(3-aminopropyl) amin und 887,8 g Wasser vorgelegt. Bei 20°C wurden innerhalb von 30 Minuten 37,0 g (0,40 mol) Epichlorhydrin zugetropft (Konzentration = 12,5 %). Es wurde 1 Stunde bei 30°C nachgerührt. Dann wurde unter Einleiten eines Stickstoffstroms weitere 2 Stunden bei 30°C gerührt. Dann wurde die Temperatur auf 50°C erhöht und der Ansatz 55 Minuten bei dieser Temperatur gehalten. Die Temperatur wurde anschließend auf 55°C erhöht. Nach 60 Minuten bei 55°C wurden 2,9 g (0,007 mol) des Polyamidamins aus Beispiel 8 a) zugegeben und bei 60°C weitere 60 Minuten gerührt, bis eine Lösungsviskosität von 55 mPas (25°C) erreicht war. Danach wurde mit 12,5 g 96 %iger Schwefelsäure auf einen pH-Wert von 2,7 eingestellt.
Feststoffgehalt: 13,7 % (5 g, 150°C, 3 Stunden)
Viskosität (25°C): 64 mPas.

Beispiel 11 (erfindungsgemäß)

Beispiel 9 wurde wiederholt mit der Änderung, daß 37,0 g (0,4 mol) Epichlorhydrin und 865 g Wasser eingesetzt wurden. Die Reaktionszeit bei 55°C betrug ca. 5 Stunden, wobei 3,7 g (0,009 mol) Polyamidamin-Vorprodukt nach Erreichen der 55°C zudosiert wurden. Abgestoppt wurde mit 9,8 g 96 %iger Schwefelsäure auf pH 2,6.
Feststoffgehalt: 13,4 % (5 g, 150°C, 3 Stunden)
Viskosität (25°C): 46 mPas.

Beispiel 12 (erfindungsgemäß)

a) Analog zu Beispiel 8 a) wurde ein Polyamidamin durch Kondensation von 1372 g (9,398 mol) Adipinsäure, 1041,5 g (10,112 mol) Diethylentriamin und 424,5 g (3,757 mol) Caprolactam hergestellt, das folgende Eigenschaften besaß:
Feststoffgehalt: 50,0 % (5 g, 150°C, 3 Stunden)
Viskosität (25°C): 330 mPas
Basen-Äquivalentgewicht: 419 g/bas.N (Lösung)
Basen-Äquivalentgewicht: 209,5 g/bas.N (Festharz).
b) Herstellung des Polyamidamin-Epichlorhydrin-Harzes
In einem Vierhalskolben mit Rührer, Thermometer, Rückflußkühler, pH-Elektrode und Gaseinleitungsrohr wurde eine Mischung von 209,5 g (0,5 mol) des Polyamidamins aus Beispiel 12a) und 737,4 g Wasser vorgelegt. Bei 20°C wurden 32,4 g (0,35 mol) Epichlorhydrin zugegeben (Konzentration = 14 %). Bei 23 bis 25°C wurde insgesamt 120 Minuten nachgerührt, wobei 60 Minuten nach beendeter Zugabe des Epichlorhydrins mit der Einleitung eines Stickstoffstroms begonnen wurde. Die Temperatur wurde anschließend auf 60°C erhöht. Man rührte unter weiterem Einleiten des Stickstoffstroms bei 60°C etwa 3 Stunden. Als das Reaktionsgemisch eine Lösungsviskosität von 55 mPas (25°C) aufwies, wurde mit 11 g 96 %iger Schwefelsäure auf einen pH-Wert von 2,4 eingestellt.
Feststoffgehalt: 14,6 % (5 g, 150°C, 3 Stunden)
Viskosität (25°C): 64 mPas.

Beispiel 13 (erfindungsgemäß)

Beispiel 12b) wurde wiederholt mit der Änderung, daß 41,6 g (0,45 mol) Epichlorhydrin und 794,1 g Wasser eingesetzt wurden. Es wurde 3 Stunden bei 23°C gerührt. Dann wurde bei 55°C 4,5 Stunden gerührt und mit 10,9 g 6 %iger Schwefelsäure bei einer Lösungsviskosität von 85 mPas (25°C) abgestoppt.
Feststoffgehalt: 15,2 % (5 g, 150°C, 3 Stunden)
Viskosität (25°C): 95 mPas.

Beispiel 14 (erfindungsgemäß)

a) Herstellung des Polyamidamins
In einem Reaktionsgefäß mit Gaseinleitungsrohr, Rührer, Innenthermometer und Kolonnenkopf wurden 211,5 g (2,05 mol) Diethylentriamin vorgelegt. Unter Rühren wurden 292 g (2,0 mol) Adipinsäure so zugegeben, daß die Temperatur des Reaktionsgemisches 110°C nicht überschritt. Nach beendeter Zugabe wurde unter Überleiten von Stickstoff auf 150°C erwärmt und 1 Stunde unter Rückfluß erhitzt.
Danach wurde die Temperatur im Verlauf von 3 Stunden auf 190 bis 195°C erhöht, wobei das Reaktionswasser kontinuierlich abdestilliert wurde. Als die theoretische Menge Wasser (72 g) abdestilliert war, wurde nach Abkühlen der Schmelze auf 170°C durch langsame Zugabe von Wasser auf den gewünschten Feststoffgehalt eingestellt.
Feststoffgehalt: 49,0 % (5 g, 150°C, 3 Stunden)
Viskosität (25°C): 470 mPas.
Basen-Äquivalentgewicht: 406 g/bas.N (Lösung)
Basen-Äquivalentgewicht: 198,9 g/bas.N (Festharz).
b) 203 g (0,5 mol) der Polyamidaminlösung aus Beispiel 14a) wurden mit 211,5 g Wasser verdünnt und mit 5,53 g (0,05 mol) 1-Chlor-propandiol 6 Stunden unter Rückfluß erhitzt.
229,8 g (0,25 mol) dieser Lösung wurden mit 279,9 g Wasser verdünnt und bei 23°C mit 16,2 g (0,175 mol) Epichlorhydrin versetzt. Es wurde 1 Stunde bei 25°C unter Einleiten eines Stickstoffstroms nachgerührt und dann auf 55°C erwärmt. Nach etwa 3,5 Stunden unter $N_2$-Einleitung bei 55°C war die Viskosität (25°C) auf 53 mPas angestiegen. Der Ansatz wurde mit 6,5 g 96 %iger Schwefelsäure auf pH 2,5 angesäuert.
Feststoffgehalt: 15,4 % (5 g, 150°C, 3 Stunden)
Viskosität (25°C): 57 mPas.

Beispiel 15 (erfindungsgemäß)

a) Analog zu Beispiel 8 a) wurde ein Polyamidamin durch Kondensation von 584,4 g (4,0 mol) Adipinsäure, 402,4 g (3,9 mol) Diethylentriamin und 12,0 g (0,2 mol) Ethylendiamin hergestellt, das folgende Eigenschaften besaß:
Feststoffgehalt: 50,0 % (5 g, 150°C, 3 Stunden)
Viskosität (25°C): 375 mPas
Basen-Äquivalentgewicht: 388 g/bas.N (Lösung)
Basen-Äquivalentgewicht: 194 g/bas.N (Festharz).
b) Herstellung des Polyamidamin-Epichlorhydrin-Harzes
In einem Vierhalskolben mit Rührer, Thermometer, Rückflußkühler, pH-Elektrode und Gaseinleitungsrohr wurde eine Mischung von 177,5 g (0,457 mol) des Polyamidamins aus Beispiel 15a) und 676,9 g Wasser vorgelegt. Bei 20°C wurden 32,4 g (0,35 mol) Epichlorhydrin zugegeben (Konzentration = 14,0 %). Bei 23 bis 25°C wurde 60 Minuten unter Einleitung eines Stickstoffstroms nachgerührt. Die Temperatur wurde anschließend auf 55°C erhöht. Man rührte unter weiterem Einleiten des Stickstoffstroms bei 55°C etwa 3,5 Stunden. Als das Reaktionsgemisch eine Lösungsviskosität von 35 mPas (25°C) aufwies, wurde mit 9,2 g 96 %iger Schwefelsäure auf einen pH-Wert von 2,8 eingestellt.
Feststoffgehalt: 14,8 % (5 g, 150°C, 3 Stunden)
Viskosität (25°C): 37 mPas.

Beispiel 16 (erfindungsgemäß)

a) Analog zu Beispiel 8 a) wurde ein Polyamidamin durch Kondensation von 1 168 g (8,0 mol) Adipinsäure, 758,8 g (7,36 mol) Diethylentriamin und 84,4 g (0,652 mol) 2-Aminoethyl-piperazin hergestellt, das folgende Eigenschaften besaß:
Feststoffgehalt: 52,5 % (5 g, 150°C, 3 Stunden)
Viskosität (25°C): 430 mPas
Basen-Äquivalentgewicht: 390 g/bas.N (Lösung)
Basen-Äquivalentgewicht: 204,8 g/bas.N (Festharz).
b) Herstellung des Polyamidamin-Epichlorhydrin-Harzes
In einem Vierhalskolben mit Rührer, Thermometer, Rückflußkühler, pH-Elektrode und Gaseinleitungsrohr wurde eine Mischung von 195 g (0,5 mol) des Polyamidamins aus Beispiel 16a) und 861,3 g Wasser vorgelegt. Bei 20°C wurden innerhalb von 30 Minuten 33,9 g (0,366 mol) Epichlorhydrin zugetropft (Konzentration = 12,5 %). Bei 23 bis 25°C wurde insgesamt 180 Minuten nachgerührt,wobei 60 Minuten nach beendeter Zugabe des Epichlorhydrins mit der Einleitung eines Stickstoffstroms begonnen wurde. Die Temperatur wurde anschließend auf 45°C erhöht. Nach 60 Minuten wurde auf 50°C erwärmt. Es wurden 5,3 g der Polyamidaminlösung aus Beispiel 16 a)

nachdosiert. Man rührte unter weiterem Einleiten des Stickstoffstroms bei 60°C noch etwa 1,5 Stunden. Als das Reaktionsgemisch eine Lösungsviskosität von 60 mPas (25°C) aufwies, wurde mit 12,1 g 96 %iger Schwefelsäure ein pH-Wert von 2,7 eingestellt.
Feststoffgehalt: 13,3 % (5 g, 150°C, 3 Stunden)
Viskosität (25°C): 69 mPas.

Zur weiteren Erläuterung des Erfindungsgegenstands wurden folgende Versuche durchgeführt, die den Effekt der Stickstoff-Entgasung (Ausblasen) zeigen:

Beispiel A (Vergleich ohne $N_2$)

(entsprechend dem niedrigsten Molverhältnis Epichlorhydrin/Basenstickstoff und der niedrigsten Konzentration gemäß Angaben der EP-A 0 374 938):

a) Herstellung der Polyamidaminlösung gemäß Beispiel 3 der EP-A 0 374 938:
309 g (3,0 mol) Diethylentriamin, 30 g Wasser, 416,2 g (2,85 mol) Adipinsäure wurden unter Zusatz von 9 g (0,09 mol) konz. Schwefelsäure kondensiert. Dazu wurde zunächst auf 140°C erwärmt und 1 Stunde bei dieser Temperatur gerührt. Die Temperatur wurde 12 Stunden bei 155 bis 160°C gehalten, wobei 136,3 g Wasser abdestilliert wurden. Danach wurde durch vorsichtige Zugabe von Wasser eine Polyamidaminlösung erhalten.
Feststoffgehalt: 50,3 %
Viskosität (25°C): 840 mPas
Basen-Äquivalentgewicht: 406 g/bas.N(Lösung)

b) Herstellung des Polyamidamin-Epichlorhydrin-Harzes:
203 g (0,5 mol) der in Beispiel A)a) erhaltenen Polyamidaminlösung wurden mit 464,7 g Wasser verdünnt. Danach wurden innerhalb 30 Minuten tropfenweise 39,3 g (0,425 mol) Epichlorhydrin bei 24°C zugegeben. Die erhaltene Lösung (Konzentration = 20,0 %) wurde nach 3 Stunden bei 25°C auf 50°C erwärmt. Nach 70 Minuten wurden 235,7 g Wasser zugesetzt und somit eine Konzentration von 15 % einestellt. Nach weiteren 30 Minuten wurde mit 13,1 g 96 %iger Schwefelsäure auf pH 2,8 angesäuert.
Feststoffgehalt: 15,0 % (5 g, 150°C, 3 Stunden)
Viskosität (25°C): 75 mPas.

Beispiel B (erfindungsgemäß mit $N_2$)

(entsprechend dem niedrigsten Molverhältnis Epi/Basen-N und der niedrigsten Konzentration gemäß Angaben der EP-A 0 374938:

Herstellung des Polyamidamin-Epichlorhydrin-Harzes:
203 g (0,5 mol) der in Beispiel A) unter a) erhaltenen Polyamidaminlösung wurden mit 464,7 g Wasser verdünnt. Danach wurden innerhalb 30 Minuten tropfenweise 39,3 g (0,425 mol) Epichlorhydrin bei 24°C zugegeben. Nach 60 Minuten wurde mit dem Einleiten von Stickstoff begonnen. Die erhaltene Lösung (Konzentration = 20,0 %) wurde nach 3 Stunden bei 25°C auf 50°C erwärmt.
Nach 30 Minuten wurden 235,7 g Wasser zugesetzt und somit eine Konzentration von 15 % einestellt. Nach weiteren 25 Minuten wurde mit 17,2 g 96 %iger Schwefelsäure auf pH 2,8 angesäuert.
Feststoffgehalt: 15,0 % (5 g, 150°C, 3 Stunden)
Viskosität (25°C): 67 mPas.

Anwendungsbeispiel

Gebleichter Kiefernsulfat-Zellstoff wurde bei einer Stoffdichte von 2,5 % im Holländer auf einen Mahlgrad von 38° Schopper-Riegler gemahlen. Hiervon wurden 100 g in ein Becherglas gegeben und mit Wasser auf 1000 ml verdünnt.

0,3 Gew.-%, 0,6 Gew.-% und 0,9 Gew.-% Festharz, bezogen auf Faserstoff, der gemäß den Beispielen hergestellten Produkte wurden als wäßrige Lösung in das Becherglas gegeben.

Nach einer Rührzeit von 3 Minuten wurden mit den Inhalten der Bechergläser auf einem Blattbildner (Rapid-Köthen-Gerät) Papierblätter mit einem Flächengewicht von ca. 80 g/m$^2$ gebildet. Die Papierblätter wurden bei 90°C 6 Minuten im Vakuum bei 20 mm Hg getrocknet und im Trockenschrank noch 15 Minuten bei 110°C nacherhitzt.

Aus jedem Papierblatt wurden nach der Klimatisierung 5 Prüfstreifen von 1,5 cm Breite ausgeschnitten und 5 Minuten in destilliertes Wasser eingetaucht. Danach wurden die nassen Streifen in einer Zugprüfmaschine sofort auf

ihre Naßbruchlast geprüft. Außerdem wurde ein handelsübliches Naßfestmittel mit hohem organischen Chlorgehalt als Standard mitgeprüft. Die Naßbruchlasten, die mit den Proben bei verschiedenen Konzentrationen erhalten wurden, wurden auf die entsprechenden Meßwerte des Standards bezogen. Es wurden die arithmetischen Mittelwerte der so erhaltenen Quotienten gebildet und nach Multiplikation mit 100 als relative Naßfestigkeit, bezogen auf den Standard, angegeben. Je niedriger der Zahlenwert, umso schlechter ist die Naßfestwirkung des Naßfestmittels.

Die Prüfergebnisse sind in Tabelle 1 zusammengefaßt.

Tabelle 1

| Analysen-Ergebnisse und relative Naßfestigkeiten (Analysendaten beziehen sich auf Festharz) | | | | | | | | |
|---|---|---|---|---|---|---|---|---|
| Beispiel | Feststoff [Gew.-%] | Viskosität [mPas] | pH | DCP [Gew.-%] | CPD [Gew.-%] | Gesamt-Cl [Gew.-%] | organ. Cl [Gew.-%] | relat. Naßfestigkeit |
| Vergleichsbeispiele | | | | | | | | |
| 1 | 15,5 | 20 | 3,4 | 4,06 | 0,52 | 13,74 | 5,29 | 103,5 |
| 2 | 17,7 | 36 | 3,4 | 0,33 | 0,16 | 11,17 | 7,04 | 80,9 |
| 3 | 15,5 | 35 | 2,8 | 0,26 | 0,032 | 9,61 | 7,35 | 88,9 |
| 4 | 13,7 | 80 | 2,7 | 0,75 | 0,80 | 12,62 | 2,41 | 97,3 |
| 5 | 13,2 | 40 | 3,5 | 2,14 | 0,81 | 12,27 | 2,95 | 103,2 |
| 6 | - | vernetzt | - | - | - | - | - | - |
| 7 | 14,2 | 75 | 2,7 | 0,014 | 0,085 | 7,96 | 3,87 | 69,6 * |
| 8 | 13,8 | 68 | 2,8 | 0,38 | 0,95 | 8,26 | 1,81 | 93,3 |
| erfindungsgemäße Beispiele | | | | | | | | |
| 9 | 13,9 | 52 | 2,6 | 0,115 | 0,165 | 7,99 | 1,58 | 97,1 |
| 10 | 13,7 | 64 | 2,7 | 0,190 | 0,234 | 8,76 | 1,61 | 97,2 |
| 11 | 13,4 | 46 | 2,6 | 0,150 | 0,35 | 9,10 | 1,72 | 91,3 |
| 12 | 14,6 | 64 | 2,4 | 0,212 | 0,05 | 8,36 | 1,44 | 97,6 |
| 13 | 15,2 | 95 | 2,7 | 0,164 | 0,10 | 9,61 | 1,71 | 99,3 |
| 14 | 15,4 | 57 | 2,5 | 0,170 | 0,09 | 8,90 | 1,75 | 95,5 |
| 15 | 14,8 | 37 | 2,8 | 0,115 | 0,07 | 9,46 | 2,23 | 92,1 |
| 16 | 13,3 | 69 | 2,7 | 0,211 | 0,271 | 8,57 | 1,43 | 98,9 |
| Zusätzliche Versuche in Anlehnung an EP 0 374 938: | | | | | | | | |
| A nicht erfindungsgemäß | | | | | | | | |
| B erfindungsgemäß | | | | | | | | |
| A | 15,0 | 75 | 2,7 | 0,474 | 0,493 | 9,70 | 5,57 | 93,3 |
| B | 15,0 | 67 | 2,8 | 0,199 | 0,236 | 9,12 | 4,91 | 95,9 |

* vorzeitige Vernetzung nach 1 Woche (Lagerstabilität nicht ausreichend)

**Patentansprüche**

**1.** Verfahren zur Herstellung von Polykondensaten durch Umsetzung von

A1) einem basischen Polyamidamin und/oder

A2) einem Polyamin, das gegebenenfalls Hydroxylgruppen enthält,

mit

B) Epichlorhydrin,
partieller Vernetzung des Reaktionsproduktes aus A1) und/oder A2) mit B) und anschließender Reaktion mit Säuren C), dadurch gekennzeichnet, daß pro Mol der in den Komponenten A1) und A2) insgesamt vorhandenen basischen N-Atome 0,3 bis 0,85 mol Epichlorhydrin eingesetzt werden, die Konzentration der Komponenten A1), A2) und B) im eingesetzten Lösungsmittel zu Beginn der Umsetzung insgesamt 35 Gew.-% nicht überschreitet, und daß vor und gegebenenfalls auch während der partiellen Vernetzung ein inertes Gas durch die Reaktionsmischung hindurchgeleitet wird, wobei das Hindurchleiten von einem inerten Gas frühestens 30 Minuten nach beendeter Zugabe des Epichlorhydrins begonnen und so lange fortgesetzt wird, bis der Gehalt an freiem Epichlorhydrin im Reaktionsgemisch weniger als 0,1 Gew.-% beträgt, bevor die partielle Vernetzung begonnen wird.

**2.** Verfahren gemäß Anspruch 1, dadurch gekennzeichnet, daß die Konzentration der Komponenten A1) und/oder A2) und B) zu Beginn der Umsetzung 12 bis 19 Gew.-% beträgt.

**3.** Verfahren gemäß Anspruch 1, dadurch gekennzeichnet, daß die Umsetzung der Komponenten A1) und/oder A2) mit B) bei einer Temperatur unterhalb 35°C erfolgt und die Temperatur zur partiellen Vernetzung dann auf 35 bis 80°C erhöht wird.

**4.** Verfahren gemäß Anspruch 1, dadurch gekennzeichnet, daß das inerte Gas im Kreislauf geführt wird.

**5.** Verfahren gemäß Anspruch 1, dadurch gekennzeichnet, daß als basische Polyamidamine A1) Kondensationsprodukte eingesetzt werden, die aus Struktureinheiten bestehen, die sich ableiten von

a) aliphatischen und/oder aromatischen Dicarbonsäuren oder deren funktionellen Derivaten und

b) Polyaminen, die mindestens zwei zur Amidbildung befähigte Aminogruppen und mindestens eine weitere sekundäre oder tertiäre Aminogruppe enthalten und gegebenenfalls

c) Polyaminen, die zwei zur Amidbildung befähigte Aminogruppen enthalten, und gegebenenfalls

d) omega-Aminocarbonsäuren und/oder Lactamen,

wobei bevorzugt auf 1 mol der Komponente a) bezogen auf 0,8 bis 1,2 mol der Komponente b) und gegebenenfalls bis zu 0,8 mol der Komponente c) und gegebenenfalls bis zu 1,5 mol der Komponente d) eingesetzt werden, mit der Maßgabe, daß das Molverhältnis (b) + c)) : a) Werte zwischen 0,8:1 und 1,2:1 annimmt.

**6.** Verfahren gemäß Anspruch 1, dadurch gekennzeichnet, daß die eingesetzten Polyamine A2) der Formel (I)

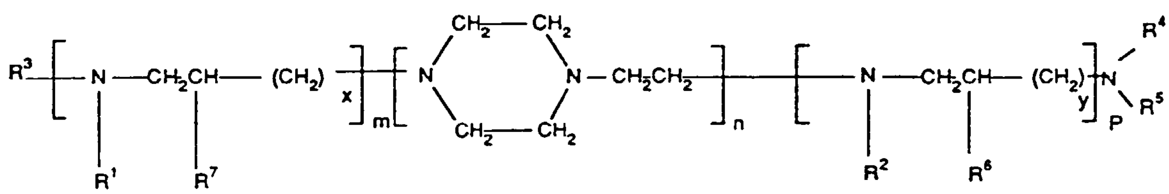

(I)

in welcher

| | |
|---|---|
| x und y | unabhängig voneinander für 0 oder 1 stehen |
| m und p | unabhängig voneinander für 0 bis 5 stehen |
| $R^6$ und $R^7$ | unabhängig voneinander für H oder Methyl stehen |
| n | für 0 bis 5 steht, |
| $R^1$, $R^2$ und $R^3$ | unabhängig voneinander für H, Methyl, Ethyl, Hydroxyethyl, Hydroxypropyl oder einen Rest der Formel (II) |

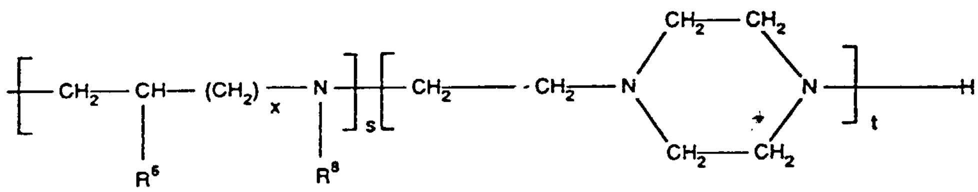

(II)

stehen,
worin

| | |
|---|---|
| $R^8$ | für H, Methyl oder Ethyl steht, |
| $R^6$ und x | die oben genannte Bedeutung haben und |
| s und t | unabhängig voneinander für 0 bis 3 |

stehen,
und

| | |
|---|---|
| $R^5$ und $R^4$ | unabhängig voneinander für H, Methyl, Ethyl, Hydroxyethyl, Hydroxypropyl stehen, wobei aber mindestens ein Rest $R^4$ oder $R^5$ für H steht oder |
| $R^4$ und $R^5$ | gemeinsam für eine Gruppe der Formel $-CH_2-CH_2-NH-CH_2-CH_2-$ stehen, und |

wobei für den Fall, daß m, n und p für Null stehen, wenigstens einer der Substituenten $R^3$, $R^4$ und $R^5$ verschieden von Wasserstoff ist,
entsprechen.

**7.** Verfahren gemäß Anspruch 1, dadurch gekennzeichnet, daß als Säuren C) Salzsäure, Schwefelsäure, Ameisensäure, Acetanhydrid und Essigsäure eingesetzt werden.

**Claims**

**1.** Process for the preparation of polycondensates by reaction of

A1) a basic polyamidoamine and/or

A2) a polyamine, which optionally contains hydroxyl groups, with

with
B) epichlorohydrin,
partial crosslinking of the reaction product of A1) and/or A2) with B) and subsequent reaction with acids C), characterised in that 0.3 to 0.85 mol of epichlorohydrin are employed per mole of the total basic N atoms present in components A1) and A2), and the concentration of components A1), A2) and B) in the solvent employed at the start of the reaction does not exceed 35% by weight in total, and in that an inert gas is passed through the reaction mixture before and if appropriate also during the partial crosslinking, the passing through of an inert gas being started at the earliest 30 minutes after addition of the epichlorohydrin has ended, and being continued until the content of free epichlorohydrin in the reaction mixture is less than 0.1% by weight, before the partial crosslinking is started.

**2.** Process according to Claim 1, characterised in that the concentration of components A1) and/or A2) and B) at the start of the reaction is 12 to 19% by weight.

**3.** Process according to Claim 1, characterised in that the reaction of components A1) and/or A2) with B) is carried out at a temperature below 35°C and the temperature for the partial crosslinking is then increased to 35 to 80°C.

**4.** Process according to Claim 1, characterised in that the inert gas is circulated.

**5.** Process according to Claim 1, characterised in that the basic polyamidoamines A1) employed are condensation products which comprise structural units which are derived from

a) aliphatic and/or aromatic dicarboxylic acids or functional derivatives thereof and

b) polyamines which contain at least two amino groups which are capable of amide formation and at least one further secondary or tertiary amino group and, if appropriate,

c) polyamines which contain two amino groups which are capable of amide formation and, if appropriate,

d) omega-aminocarboxylic acids and/or lactams,
0.8 to 1.2 mol of component b) and, if appropriate, up to 0.8 mol of component c) and, if appropriate, up to 1.5 mol of component d) preferably being employed per mole of component a), with the proviso that the molar ratio of (b) + c)) :a) assumes values of between 0.8:1 and 1.2:1.

**6.** Process according to Claim 1, characterised in that the polyamines A2) employed correspond to the formula (I)

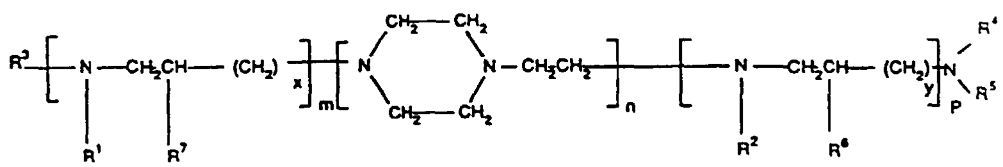

(I)

in which

| | |
|---|---|
| x and y | independently of one another represent 0 or 1, |
| m and p | independently of one another represent 0 to 5, |
| $R^6$ and $R^7$ | independently of one another represent H or methyl, |
| n | represents 0 to 5, |
| $R^1$, $R^2$ and $R^3$ | independently of one another represent H, methyl, ethyl, hydroxyethyl, hydroxypropyl or a radical of the formula (II) |

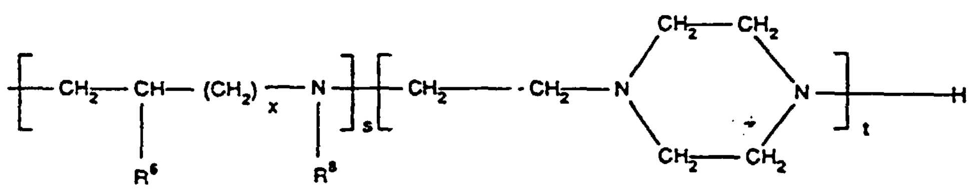

(II)

wherein

| | |
|---|---|
| $R^8$ | represents methyl or ethyl, |
| $R^6$ and x | have the abovementioned meaning and |
| s and t | independently of one another represent 0 to 3, |

and

| | |
|---|---|
| $R^5$ and $R^4$ | independently of one another represent H, methyl, ethyl, hydroxyethyl or hydroxypropyl, but at least one radical $R^4$ or $R^5$ represents H, or |
| $R^4$ and $R^5$ | together represent a group of the formula |

$-CH_2-CH_2-NH-CH_2-CH_2-$,

and

in the case where m, n and p represent zero, at least one of the substituents $R^3$, $R^4$ and $R^5$ is other than hydrogen.

**7.** Process according to Claim 1, characterised in that hydrochloric acid, sulphuric acid, formic acid, acetic anhydride and acetic acid are employed as acids C).

**Revendications**

**1.** Procédé de préparation de polycondensats par réaction de

A1) une polyamideamine basique et/ou
A2) une polyamine, qui contient éventuellement des groupes hydroxyles, avec
B) l'épichlorhydrine,

réticulation partielle du produit réactionnel provenant de A1) et/ou A2) avec B) puis réaction avec des acides C), caractérisé en ce que l'on utilise 0,3 à 0,85 mol d'épichlorhydrine par mole des atomes N basiques présents au total dans les composants A1) et A2), la concentration des composants A1), A2) et B) dans le solvant employé ne dépasse pas au total 35 % en masse au début de la réaction, et en ce qu'un gaz inerte est introduit dans le mélange réactionnel avant et éventuellement aussi pendant la réticulation partielle, l'introduction d'un gaz inerte commençant au plus tôt 30 min après la fin de l'addition de l'épichlorhydrine et étant maintenue jusqu'à ce que la teneur en épichlorhydrine libre dans le mélange réactionnel soit inférieure à 0,1 % en masse, avant que la réticulation partielle soit commencée.

**2.** Procédé selon la revendication 1, caractérisé en ce que la concentration des composants A1) et/ou A2) et B) est de 12 à 19 % en masse au début de la réaction.

**3.** Procédé selon la revendication 1, caractérisé en ce que la réaction des composants A1) et/ou A2) avec B) a lieu à une température inférieure à 35°C après quoi la température est portée à 35-80°C pour la réticulation partielle.

**4.** Procédé selon la revendication 1, caractérisé en ce que le gaz inerte est introduit dans un circuit.

**5.** Procédé selon la revendication 1, caractérisé en ce que l'on utilise comme polyamideamines basiques A1) des produits de condensation qui consistent en unités structurales qui dérivent

a) d'acides dicarboxyliques aliphatiques et/ou aromatiques ou de leurs dérivés fonctionnels et
b) de polyamines qui contiennent au moins deux groupes amino capables de former des amides et au moins un autre groupe amino secondaire ou tertiaire et éventuellement
c) de polyamines qui contiennent deux groupes amino capables de former des amides, et éventuellement
d) d'acides oméga-aminocarboxyliques et/ou de lactames,

auquel cas, de préférence, on utilise dans chaque cas, par rapport à 1 mol de composant a), 0,8 à 1,2 mol de composant b) et éventuellement jusqu'à 0,8 mol de composant c) et éventuellement jusqu'à 1,5 mol de composant d), à condition que le rapport molaire (b) + c)) : a) prenne des valeurs comprises entre 0,8:1 et 1,2:1.

**6.** Procédé selon la revendication 1, caractérisé en ce que les polyamines A2) utilisées correspondent à la formule (I)

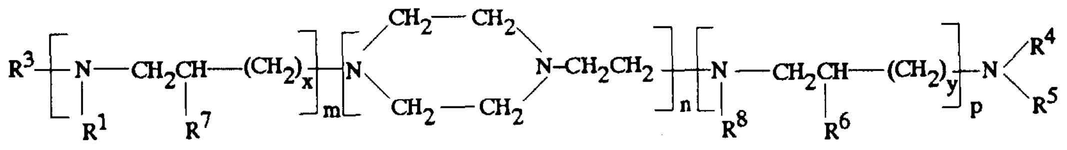

(I)

dans laquelle

x et y représentent indépendamment l'un de l'autre 0 ou 1
m et p représentent indépendamment l'un de l'autre 0 à 5
$R^6$ et $R^7$ représentent indépendamment l'un de l'autre H ou méthyle
n représente 0 à 5
$R^1$, $R^2$ et $R^3$ représentent indépendamment l'un de l'autre H, méthyle, éthyle, hydroxyéthyle, hydroxypropyle ou un reste de formule (II)

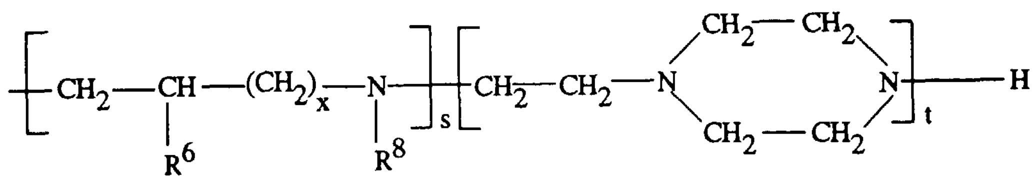

(II)

dans laquelle

$R^8$ représente H, méthyle ou éthyle,
$R^6$ et x ont la signification indiquée ci-dessus et s et t représentent indépendamment l'un de l'autre 0 à 3,

et

$R^5$ et $R^4$ représentent indépendamment l'un de l'autre H, méthyle, éthyle, hydroxyéthyle, hydroxypropyle, au moins un reste $R^4$ ou $R^5$ représentant cependant Hou
$R^4$ et $R^5$ représentant ensemble un groupe de formule $-CH_2-CH_2-NH-CH_2-CH_2-$, et
au cas où m, n et p sont nuls, au moins l'un des substituants $R^3$, $R^4$ et $R^5$ est différent de l'hydrogène.

**7.** Procédé selon la revendication 1, caractérisé en ce que l'on utilise comme acides C) l'acide chlorhydrique, l'acide sulfurique, l'acide formique, l'anhydride acétique et l'acide acétique.